# EUROPEAN PATENT APPLICATION

(11) **EP 2 879 087 A1**
(43) Date of publication of application: **03.06.2015**
(21) Application number: 12881707.9
(22) Date of filing: 26.09.2012
(51) Int. Cl.: G06Q 50/10, G06Q 30/04

(54) **SaaS PAYMENT PROCESSING SYSTEM, SaaS USAGE FEE PAYMENT PROCESSING METHOD, AND PROGRAM**

(30) Priority: 27.07.2012 JP 2012167628
(71) Applicant: Hitachi Systems, Ltd., Tokyo 141-8672 (JP)
(72) Inventor: WADA, Hiroshi, Tokyo 141-8672 (JP); YAMAGISHI, Nobuyuki, Tokyo 141-8672 (JP); HORIGUCHI, Makoto, Tokyo 141-8672 (JP); TANAKA, Akikazu, Tokyo 141-8672 (JP)
(74) Representative: Palacci, Jeremie
(86) International application number: PCT/JP2012/074632
(87) International publication number: WO 2014/016977

(57) **Abstract**

The necessity of calculating a SaaS usage fee by a SaaS service provider is eliminated, and operation efficiency of the SaaS service provider is improved. When a SaaS user 10 uses a SaaS 14, the used volume thereof is accumulated in an operation-system database 21 through a SaaS execution infrastructure 17. When a usage-fee calculation date of the SaaS 14 comes, a business infrastructure 18 acquires used-volume information from an operation infrastructure 19 and calculates a usage fee of the SaaS 14 in accordance with application contents of the SaaS user 10 and usage cost of the SaaS execution infrastructure 17, the business infrastructure 18, and the operation infrastructure 19 used by the SaaS service provider 12 for realizing the SaaS 14. When a billing date comes, the usage fee of the SaaS 14 is billed to the SaaS user 10 and, after money is received, the usage cost of the SaaS service infrastructure 16 of the SaaS service provider 12 is subtracted therefrom, and the difference thereof is paid to the SaaS service provider 12.

## Description

### TECHNICAL FIELD

The present invention relates to SaaS (Software as a Service) and particularly relates to techniques that are effective in settlement of a SaaS service-infrastructure usage fee of an infrastructure-service providing service, which carries out order entry, provisioning, charging, billing, and collecting in SaaS, and in settlement of a SaaS usage fee subjected to substitutional collection.

### BACKGROUND ART

In order to realize the software, i.e., so-called SaaS that is configured to enable selection and usage of an only required function(s) when a user accepts software provision, a SaaS service infrastructure, which carries out order entry, provisioning, charging, billing, and collecting, is required in addition to a SaaS execution infrastructure, which causes application software to operate.

Other than a case in which a SaaS service infrastructure including a SaaS execution infrastructure is prepared by a SaaS service provider, there is a case in which a SaaS service infrastructure provided by an infrastructure service provider is used. The SaaS service provider carries out charging in accordance with the type and volume of the SaaS used by a SaaS user, calculates a SaaS usage fee, bills that to the SaaS user, and collects the SaaS usage fee.

In many cases, the usage fee of SaaS is subjected to charging, billing, and collecting by a certain period such as a price per month or per day. Therefore, when SaaS users are increased, the processing contents are also complicated, and the volume of processing is also increased.

When the SaaS service provider uses the SaaS service infrastructure of the infrastructure service provider, a SaaS service-infrastructure usage fee is paid to the infrastructure service provider in accordance with the type and volume of the SaaS service-infrastructure service.

The SaaS usage fee is charged depending on the amount of SaaS used by a SaaS user. Therefore, a product which is SaaS and a client which is a SaaS user have to be associated with each other and managed by an agreement.

The usage fee of the SaaS service infrastructure for realizing SaaS has to be managed by associating, for each product, the product which is SaaS with the configuration of the SaaS service infrastructure, which is used for realizing SaaS.

The SaaS user and the SaaS service infrastructure are associated with each other via the product which is SaaS, and the product which is SaaS has a relation that it is associated with the SaaS service provider.

SaaS flexibly supports traffic variations and is often operated on a virtualized SaaS execution infrastructure in order to reduce cost.

In order to calculate the usage fee of the SaaS service infrastructure, the type and volume of the used infrastructure have to be measured. However, since SaaS is operated on the virtualized execution infrastructure, the measured type and volume of the physical infrastructure have to be replaced with those of the virtualized execution infrastructure and associated with SaaS.

The SaaS usage fee of which money is received from the SaaS user has to be summed for each product which is SaaS, the usage fee of the virtualized infrastructure used for the product which is SaaS by replacing the physically-measured type and volume of the infrastructure with those of the virtualized infrastructure has to be summed for each product, and the SaaS usage fee and the infrastructure usage fee have to be configured to correspond to each other.

As a technique that reduces labor required for settlement processes, for example, a netting service that carries out multilateral settlement of credits and debts among other companies has been widely used.

As such a netting service system, in a case in which data representing a credit having any of companies as a creditor is stored in a credit database, there is a system that eliminates the necessity of money transfer by extending the deadline of the credit and, if data representing a credit which has any of the companies as a debtor with use of a credit as a result of multilateral offset and data representing a credit which has a deadline ahead of the same deadline and has the company as a creditor are stored in a credit database, by offsetting between such credits (for example, see Patent Document 1).

### RELATED ART DOCUMENT

### PATENT DOCUMENT

Patent Document 1: Japanese Patent Application Laid-Open No. 2008-250440

### SUMMARY OF THE INVENTION

### PROBLEMS TO BE SOLVED BY THE INVENTION

However, the present inventors have found out that the settlement processing technique by the netting service as described above has below problems.

An object of the netting service system is to eliminate the money transferring procedure of the settlement process that eventually involves money transfer. However, a billed price has to be calculated and billed by each company every time.

Upon provision of SaaS, the credits with respect to SaaS users of a SaaS service provider generated depending on the types and volumes of services, and the debts for a SaaS infrastructure service provider of the SaaS service provider generated by the types and volumes of the infrastructures required for realizing the services have to be calculated and billed by the SaaS service provider.

Therefore, there are problems that the processing man-hours of the SaaS service provider are increased, and the load is increased, thereby lowering the service efficiency.

An object of the present invention is to provide the techniques that eliminates the necessity of calculating the SaaS usage fee by the SaaS service provider and improves service efficiency of the SaaS service provider.

The above-described and other objects and novel characteristics of the present invention will be apparent from the description and attached drawings of the present specification.

### MEANS FOR SOLVING THE PROBLEMS

Outlines of typical elements of the invention disclosed in the present application will be simply explained as below.

In order to achieve the above-described object, the present invention realizes a mechanism that calculates a SaaS usage fee determined by the type and volume of a service used by a SaaS user, calculates a usage fee of a SaaS service infrastructure charged on a SaaS service provider, offsets money received from the SaaS user and the SaaS service-infrastructure usage fee of the SaaS service provider, and pays the balance price to the SaaS service provider.

The present invention is a SaaS settlement system having a SaaS service infrastructure that realizes a SaaS service. The SaaS service infrastructure includes: a SaaS execution infrastructure that operates application software of a SaaS service provider and realizes a SaaS; a business infrastructure that calculates a usage fee of the SaaS to be billed to a SaaS user and carries out fee billing/collecting with respect to the SaaS user; and an operation infrastructure that determines operation of the SaaS in accordance with an application content of the SaaS user and monitors and operates a providing state of the SaaS.

The operation infrastructure measures a used volume of the SaaS used by the SaaS user and a used volume of the SaaS service infrastructure used by the SaaS. The business infrastructure calculates, as a price to be paid to the SaaS service provider, a difference obtained by subtracting a usage fee of the SaaS service infrastructure calculated from the used volume of the SaaS service infrastructure from a usage fee of the SaaS calculated from the used volume of the SaaS measured by the operation infrastructure. Further, the present invention can be applied to a method by a computer system provided with a SaaS service infrastructure that includes a SaaS execution infrastructure that operates application software of a SaaS service provider and realizes the SaaS, a business infrastructure that calculates a usage fee of the SaaS to be billed to a SaaS user and carries out fee billing/collecting with respect to the SaaS user, and an operation infrastructure that determines operation of the SaaS in accordance with an application content of the SaaS user and monitors and operates a providing state of the SaaS; and to a program executed by the computer system.

### EFFECTS OF THE INVENTION

Effects obtained by the typical elements of the invention disclosed in the present application are simply explained below.
(1) The load of settlement processes on the SaaS service provider can be reduced.
(2) SaaS service efficiency can be improved by above-described (1).

### BRIEF DESCRIPTIONS OF THE DRAWINGS

FIG. 1 is an explanatory drawing showing an example of the outlines of a SaaS settlement system according to an embodiment of the present invention;
FIG. 2 is an explanatory drawing showing a detailed configuration example of the SaaS settlement system of FIG. 1;
FIG. 3 shows explanatory drawings showing an example of the data configuration of a SO/client database provided in the SaaS settlement system of FIG. 2;
FIG. 4 shows explanatory drawings showing an example of the data configuration of a fee database provided in the SaaS settlement system of FIG. 2;
FIG. 5 shows explanatory drawings showing an example of the data configuration of a product database provided in the SaaS settlement system of FIG. 2;
FIG. 6 shows explanatory drawings showing an example of the data configuration of a service-provider database provided in the SaaS settlement system of FIG. 2;
FIG. 7 shows explanatory drawings showing an example of the data configuration of a configuration database provided in the SaaS settlement system of FIG. 2;
FIG. 8 shows explanatory drawings showing an example of the data configuration of a used-volume-information database provided in the SaaS settlement system of FIG. 2;
FIG. 9 is an explanatory drawing showing an example of SaaS product registration by the SaaS settlement system of FIG. 2;
FIG. 10 is an explanatory drawing showing an example of SaaS application and provisioning by the SaaS settlement system of FIG. 2;
FIG. 11 is an explanatory drawing showing an example of an application process of a SaaS service infrastructure by the SaaS settlement system of FIG. 2;
FIG. 12 is an explanatory drawing showing an example of a used-volume measuring process of a SaaS and the SaaS service infrastructure by the SaaS settlement system of FIG. 2;
FIG. 13 is an explanatory drawing showing an example of a calculation process of the usage fee of the SaaS by the SaaS settlement system of FIG. 2;
FIG. 14 is an explanatory drawing showing an example of a calculation process of usage cost of the SaaS service infrastructure by the SaaS settlement system of FIG. 2;
FIG. 15 is an explanatory drawing showing an example of a billing/collecting process of the usage fee of the SaaS by the SaaS settlement system of FIG. 2;
FIG. 16 is an explanatory drawing showing an example of an offset process of the usage fee of the SaaS and the usage cost of the SaaS service infrastructure by the SaaS settlement system of FIG. 2;
FIG. 17 is an explanatory drawing showing an example of a payment process of a balance price by the SaaS settlement system of FIG. 2; and
FIG. 18 is an explanatory drawing showing relations of a business-system database and an operation-system database provided in the SaaS settlement system of FIG. 2.

### Detailed Description of Preferred Embodiment

Hereinafter, embodiments of the invention will be explained in detail with reference to the drawings. Note that, in all drawings for explanation of the embodiments, the same members basically have the same signs and their repetitive explanation will be omitted.

### <Outlines of the Invention>

An outline of the present invention is a SaaS settlement system (a SaaS settlement system) having a SaaS service infrastructure (a SaaS service infrastructure 16), which realizes SaaS services.

The SaaS service infrastructure has a SaaS execution infrastructure (a SaaS execution infrastructure 17), a business infrastructure (a business infrastructure 18, a fee management unit 182), and an operation infrastructure (an operation infrastructure 19, a used-volume management unit 194).

The SaaS execution infrastructure causes application software (application software 15) of a SaaS service provider (a SaaS service provider 12) to operate and realizes SaaS (SaaS 14).

The business infrastructure calculates a usage fee of the SaaS billed to a SaaS user (a SaaS user 10) and carries out billing and collection of the fee with respect to the SaaS user.

The operation infrastructure determines operation of the SaaS and monitors/operates the providing state of the SaaS in accordance with application contents of the SaaS user. Moreover, the operation infrastructure measures the used volume of the SaaS used by the SaaS user and the used volume of the SaaS service infrastructure used by the SaaS.

The business infrastructure calculates the usage fee of the SaaS from the used volume of the SaaS measured by the operation infrastructure and the usage fee of the SaaS service infrastructure from the used volume of the SaaS service infrastructure.

Then, the usage fee of the SaaS service infrastructure calculated from the used volume of the SaaS service infrastructure is subtracted from the usage fee of the SaaS calculated from the used volume of the SaaS measured by the operation infrastructure, and the difference thereof is calculated as a price to be paid to the SaaS service provider.

Moreover, an outline of the present invention is a SaaS usage-fee settlement method of carrying out settlement of usage fees of the SaaS (SaaS 14) by a computer system (a SaaS settlement system 1) provided with the SaaS service infrastructure (the SaaS service infrastructure 16) that includes the SaaS execution infrastructure (the SaaS execution infrastructure 17), which causes the application software (the application software 15) of the SaaS service provider (the SaaS service provider 12) to operate and realizes the SaaS, the business infrastructure (the business infrastructure 18), which calculates the usage fee of the SaaS to be billed to the SaaS user (the SaaS user 10) and carries out billing and collection of the fee with respect to the SaaS user, and the operation infrastructure (the operation infrastructure 19), which determines the operation of the SaaS in accordance with the application contents of the SaaS user and monitors and operates the providing state of the SaaS.

The SaaS usage-fee settlement method has the following steps.

The steps are:
a step of measuring the used volume of the SaaS, which is used by the SaaS user, by the operation infrastructure (the used-volume management unit 194);
a step of measuring the used volume of the SaaS service infrastructure, which is used by the SaaS, by the operation infrastructure (the used-volume management unit 194);
a step of calculating the usage fee of the SaaS from the used volume of the SaaS, which is measured by the operation infrastructure, by the business infrastructure;
a step of calculating the usage fee of the SaaS service infrastructure from the used volume of the SaaS service infrastructure, by the business infrastructure; and
a step of calculating, as a price to be paid to the SaaS service provider, the difference obtained by subtracting the calculated usage fee of the SaaS service infrastructure from the calculated usage fee of the SaaS, by the business infrastructure.

Furthermore, an outline of the present invention is a program executed by the computer system (the SaaS settlement system 1) provided with the SaaS service infrastructure (the SaaS service infrastructure 16) that includes the SaaS execution infrastructure (the SaaS execution infrastructure 17), which causes the application software (the application software 15) of the SaaS service provider (the SaaS service provider 12) to operate and realizes the SaaS (the SaaS 14), the business infrastructure (the business infrastructure 18), which calculates the usage fee of the SaaS to be billed to the SaaS user (the SaaS user 10) and carries out billing and collection of the fee with respect to the SaaS user, and the operation infrastructure (the operation infrastructure 19), which determines the operation of the SaaS in accordance with the application contents of the SaaS user and monitors and operates the providing state of the SaaS.

This program includes:
a step of measuring the used volume of the SaaS, which is used by the SaaS user, by the operation infrastructure (the used-volume management unit 194);
a step of measuring the used volume of the SaaS service infrastructure, which is used by the SaaS, by the operation infrastructure (the used-volume management unit 194);
a step of calculating the usage fee of the SaaS from the used volume of the SaaS, which is measured by the operation infrastructure, by the business infrastructure;
a step of calculating the usage fee of the SaaS service infrastructure from the used volume of the SaaS service infrastructure by the business infrastructure; and
a step of calculating, as a price to be paid to the SaaS service provider, the difference obtained by subtracting the calculated usage fee of the SaaS service infrastructure from the calculated usage fee of the SaaS, by the business infrastructure

Hereinafter, the embodiment will be explained in detail based on the above-described outlines.

### <Configuration Example of SaaS Settlement System>

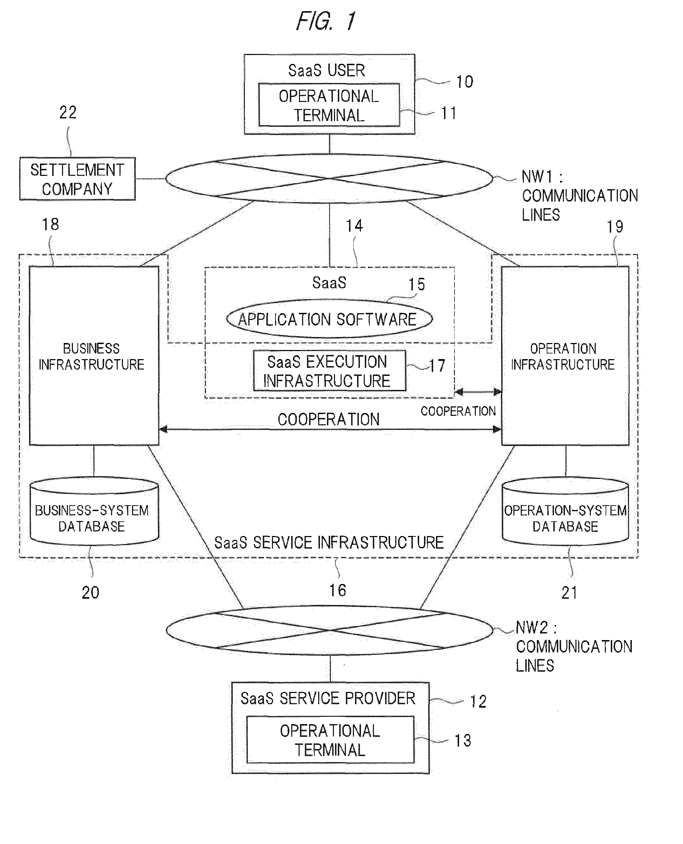

FIG. 1 is an explanatory drawing showing an example of the outlines of the SaaS settlement system 1. The SaaS settlement system 1 is a system, which carries out settlement of SaaS usage cost. The SaaS settlement system 1 has the SaaS 14 and the SaaS service infrastructure 16.

The SaaS service infrastructure 16 has the business infrastructure 18, the operation infrastructure 19, a business-system database 20, and an operation-system database 21. The business infrastructure 18 and the operation infrastructure 19 are mutually connected with an operational terminal 11, a terminal possessed by a settlement company 22, etc. via communication lines NW1.

The business infrastructure 18 and the operation infrastructure 19 are mutually connected with an operational terminal 13 via communication lines NW2. The operational terminal 11 is a terminal possessed by the SaaS user 10, and the operational terminal 13 is a terminal possessed by the SaaS service provider 12. The communication lines NW1 and NW2 consist of, for example, communication-line networks such as Internet lines or dedicated communication lines.

The SaaS 14 has the application software 15 and the SaaS execution infrastructure 17. Regarding realization of the product of the SaaS 14, the service is realized by executing the application software 15 with the SaaS execution infrastructure 17 for realizing the SaaS product.

The SaaS service infrastructure 16 has the business infrastructure 18, the operation infrastructure 19, the business-system database 20, the operation-system database 21, and the above-described SaaS execution infrastructure 17.

The business infrastructure 18 and the operation infrastructure 19 are mutually connected with the operational terminal 11, the terminal possessed by the settlement company 22, etc. via the communication lines NW1. Moreover, the business infrastructure 18 and the operation infrastructure 19 are mutually connected with the operational terminal 13 via the communication lines NW2.

### <Operation Outlines of SaaS Settlement System>

Outlines of operation of the SaaS settlement system 1 of FIG. 1 will be explained.

First, the SaaS user 10 sends an application from the operational terminal 11 to the business infrastructure 18 of the SaaS service infrastructure 16 to use the SaaS 14, which is realized by causing the application software 15 of the SaaS service provider 12 to operate on the SaaS execution infrastructure 17 of the SaaS service infrastructure 16.

Subsequently, the business infrastructure 18 stores the contents of the application in the business-system database 20, transmits them to the operation infrastructure 19 to store the contents of the application in the operation-system database 21, and carries out setting of the application software 15 through the SaaS execution infrastructure 17. As a result, a service of the SaaS 14 corresponding to the application of the client is started.

When the SaaS user 10 uses the SaaS 14 from the operational terminal 11, the used volume is accumulated in the operation-system database 21 of the operation infrastructure 19 through the SaaS execution infrastructure 17.

When a usage-fee calculation date of the SaaS 14 comes, the business infrastructure 18 acquires used-volume information from the operation infrastructure 19. Then, the SaaS-14 usage fee of the SaaS user 10 in accordance with the application contents of the SaaS user 10 and the usage cost of the SaaS execution infrastructure 17, the business infrastructure 18, and the operation infrastructure 19 used for realizing the SaaS 14 by the SaaS service provider 12 are calculated.

When a billing date comes, the usage fee of the SaaS 14 is billed to the SaaS user 10. After the money thereof is received, the usage cost of the SaaS execution infrastructure 17, the business infrastructure 18, and the operation infrastructure 19 of the SaaS service provider 12 is subtracted therefrom, and the difference thereof is paid to the SaaS service provider 12.

### <Detailed Configuration Example of SaaS Settlement System>

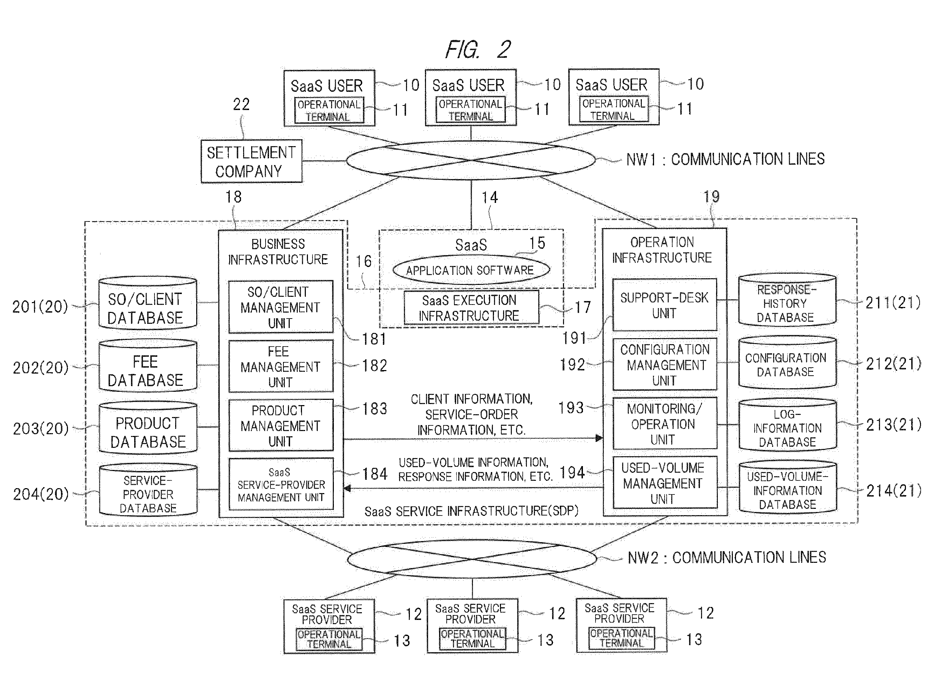

FIG. 2 is an explanatory drawing showing a detailed configuration example of the SaaS settlement system 1 of FIG. 1.

The business infrastructure 18 has a SO (Service Order)/Client management unit 181, the fee management unit 182, a product management unit 183, and a SaaS service-provider management unit 184. The business-system database 20 has a SO/client database 201, a fee database 202, a product database 203, and a service-provider database 204.

The operation infrastructure 19 has a support-desk unit 191, a configuration management unit 192, a monitoring/operation unit 193, and a used-volume management unit 194. The operation-system database 21 has a response-history database 211, a configuration database 212, a log-information database 213, and a used-volume-information database 214.

Each of the SO/client database 201, the fee database 202, the product database 203, and the service-provider database 204 is connected to the business infrastructure 18. Each of the response-history database 211, the configuration database 212, the log-information database 213, and the used-volume-information database 214 is connected to the operation infrastructure 19.

The business infrastructure 18 and the operation infrastructure 19 are mutually connected. For example, client information, service-order information, etc. are transmitted from the business infrastructure 18 to the operation infrastructure 19; and, for example, usage-fee information, correspondence information, etc. are transmitted from the operation infrastructure 19 to the business infrastructure 18.

The SaaS 14, the business infrastructure 18, and the operation infrastructure 19 are connected to the communication lines NW1. Each of a computer(s) possessed by the settlement company 22 and a plurality of operational terminals 11 possessed by a plurality of SaaS users 10 is connected to the communication lines NW1.

The communication lines NW2 are connected to the business infrastructure 18 and the operation infrastructure 19. Each of a plurality of operational terminals 13 possessed by a plurality of SaaS service providers 12 is connected to the communication lines NW2.

As described above, in order to realize a SaaS product, the application software 15 is executed by the SaaS execution infrastructure 17 for realizing the SaaS product, and a service of the SaaS 14 is realized.

### <Data Configuration Examples of Databases>

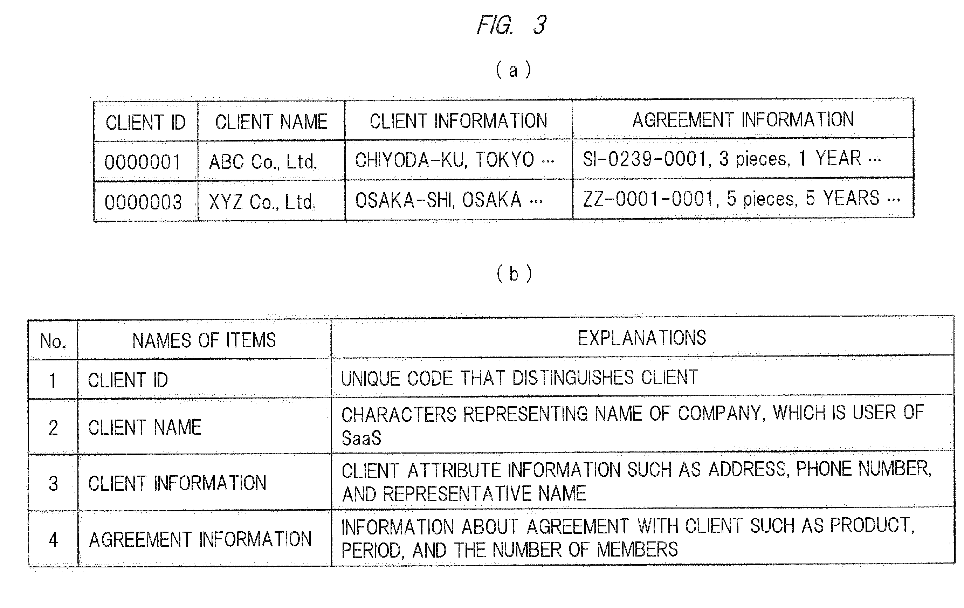

FIG. 3 shows explanatory drawings showing an example of the data configuration of the SO/client database 201.

As shown in FIG. 3 (a), the SO/client database 201 consists of items of client IDs, client names, client information, and agreement information. Explanations of the items are as shown in FIG. 3 (b). The client ID is a unique code that distinguishes a client, and the client name is a character(s) representing the name of a company, which is a user of the SaaS.

The client information consists of information of client attributes such as addresses, phone numbers, and representative names. The agreement information consists of information about an agreement with the client such as a product, period, and the number of members.

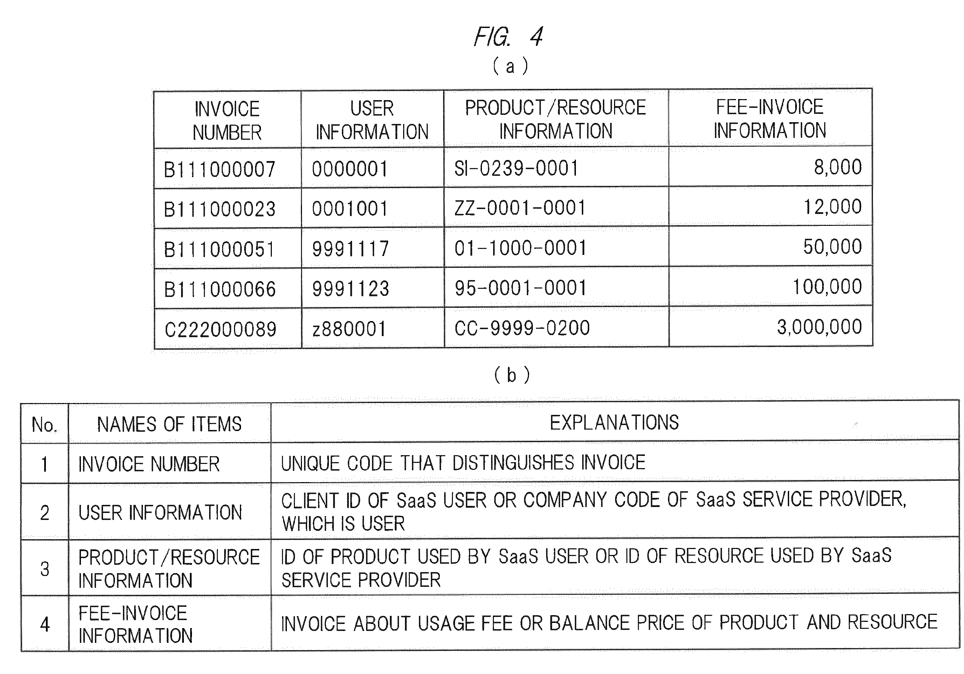

FIG. 4 shows explanatory drawings showing an example of the data configuration of the fee database 202.

As shown in FIG. 4 (a), the fee database 202 consists of items of invoice numbers, user information, product/resource information, and fee-invoice information.

The explanations of the items are as shown in FIG. 4 (b). The invoice number is a unique code that distinguishes an invoice. The user information consists of the client ID of the SaaS user or a company code of the SaaS service provider, which is a user. The product/resource information consists of an ID of a product used by the SaaS user or an ID (code) of a resource used by the SaaS service provider. The fee-invoice information consists of an invoice about the usage fee or a balance price of the product and resource.

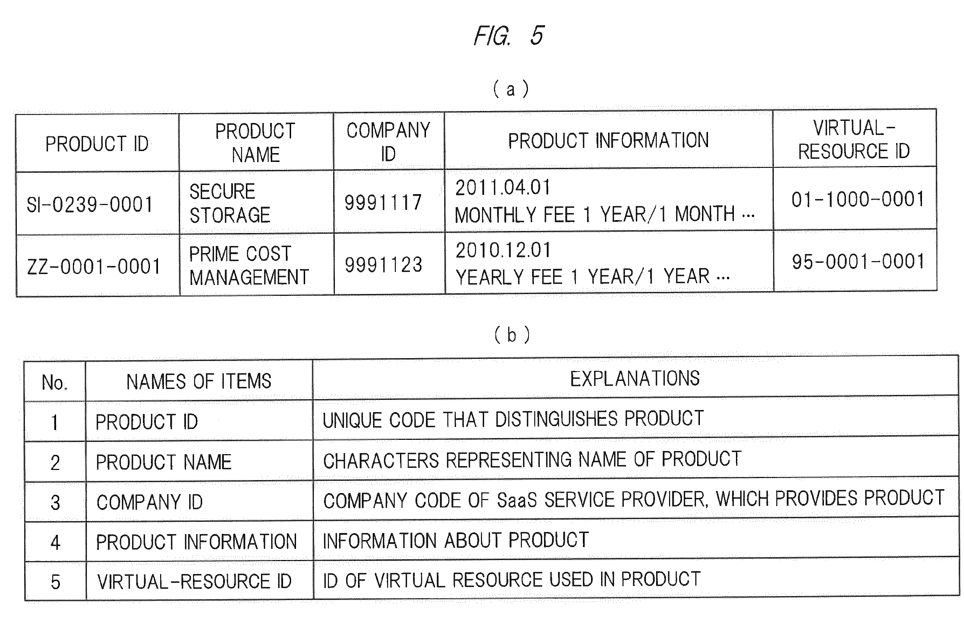

FIG. 5 shows explanatory drawings showing an example of the data configuration of the product database 203.

As shown in FIG. 5 (a), the product database 203 consists of items of product IDs, product names, company IDs, product information, and virtual-resource IDs.

The explanations of the items are as shown in FIG. 5 (b). The product ID is a unique code that distinguishes a product, and the product name is a character (s) representing the name of the product. The company ID is the company code of the SaaS service provider which provides the product, and the product information is information about the product. The virtual-resource ID is an ID (code) of a virtual resource used in the product.

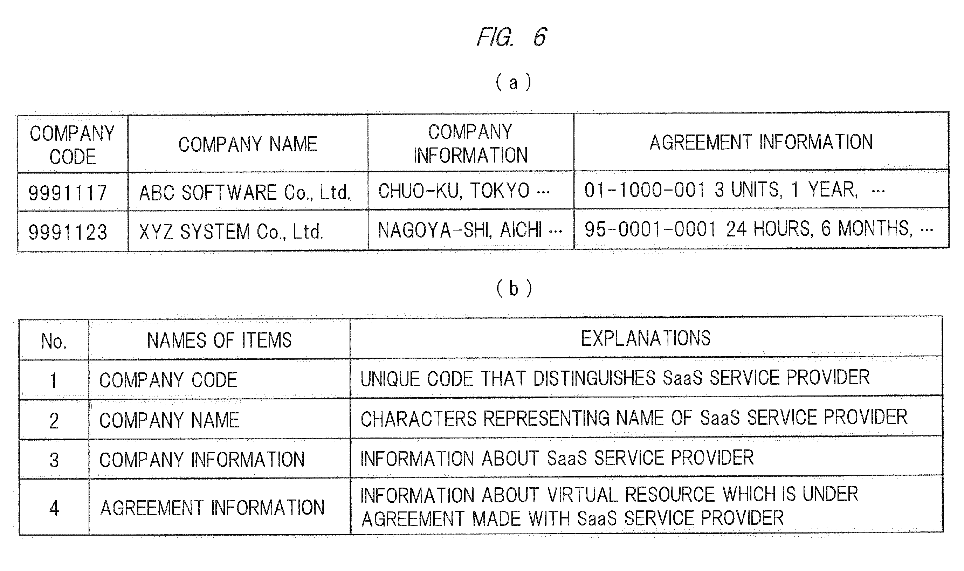

FIG. 6 shows explanatory drawings showing an example of the data configuration of the service-provider database 204.

As shown in FIG. 6 (a), the service-provider database 204 consists of items of company codes, company names, company information, and agreement information.

The explanations of the items are as shown in FIG. 6 (b). The company code is a unique code that distinguishes a SaaS service provider, and the company name is a character (s) representing the name of the SaaS service provider. The company information is information about the SaaS service provider, and the agreement information is information about a virtual resource which is under an agreement made with the SaaS service provider.

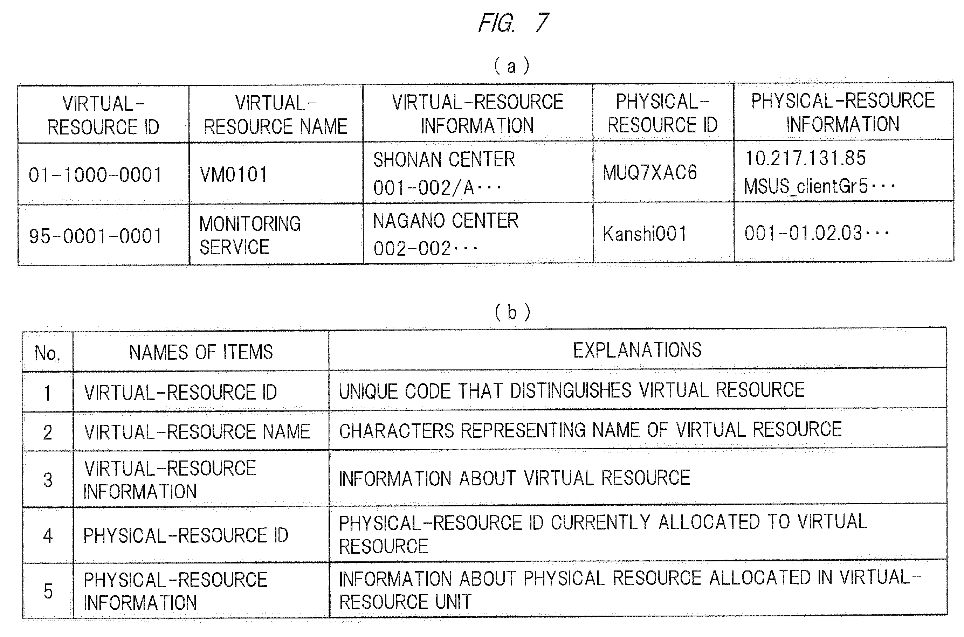

FIG. 7 shows explanatory drawings showing an example of the data configuration of the configuration database 212.

As shown in FIG. 7 (a), the configuration database 212 consists of items of virtual-resource IDs, virtual-resource names, virtual-resource information, physical-resource IDs, and physical-resource information.

The explanations of the items are as shown in FIG. 7 (b). The virtual-resource ID is a unique code that distinguishes a virtual resource. The virtual-resource name is a character (s) representing the name of the virtual-resource, and the virtual-resource information is information about the virtual resource.

The physical-resource ID is a physical-resource ID currently allocated to a physical resource, and the physical-resource information is information about the physical resource allocated in a virtual-resource unit.

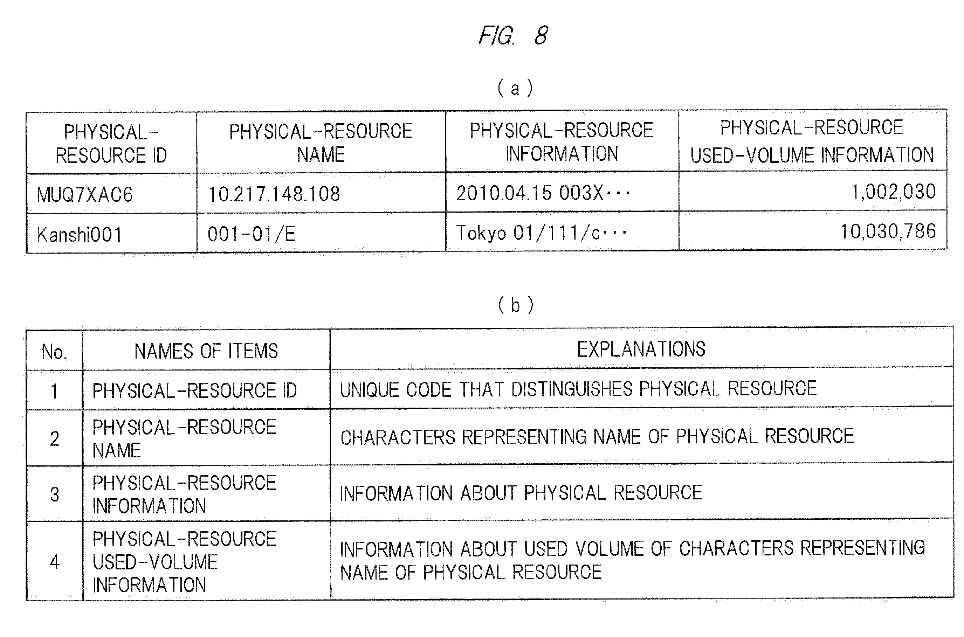

FIG. 8 shows explanatory drawings showing an example of the data configuration of the used-volume-information database 214.

As shown in FIG. 8 (a), the used-volume-information database 214 consists of items of physical-resource IDs, physical-resource names, physical-resource information, and physical-resource used-volume information.

The explanations of the items are as shown in FIG. 8 (b). The physical-resource ID is a unique code that distinguishes a physical resource. The physical-resource name is a character (s) representing the name of the physical resource, the physical-resource information is information about the physical resource, and the physical-resource used-volume information is information about the used volume of the character (s) representing the name of the physical resource.

### <Example of SaaS Product Registration>

SaaS product registration will be explained.

Regarding the realized SaaS 14, the SaaS service provider 12 registers the SaaS 14 in the business infrastructure 18, which is in the SaaS service infrastructure 16, by using the operational terminal 13. The contents of the SaaS 14 are stored from the product management unit 183 into the product database 203, from the SaaS service-provider management unit 184 into the service-provider database 204, and from the fee management unit 182 into the fee database 202.

### <Example of Application and Provisioning of SaaS 14>

Application and provisioning of the SaaS 14 will be explained.

When the SaaS user 10 checks the contents of the SaaS 14 registered in the business infrastructure 18 by using the operational terminal 11 and wishes to purchase the contents, the SaaS user 10 applies for the SaaS 14 from the operational terminal 11. The contents thereof are stored from the SO/client management unit 181 into the SO/client database 201.

The operation infrastructure 19 is informed of client information and service-order information, and such information is stored from the support-desk unit 191 into the response-history database 211, from the configuration management unit 192 into the configuration database 212, from the monitoring/operation unit 193 into the log-information database 213, and from the used-volume management unit 194 into the used-volume-information database 214. At the same time, the SaaS 14 set at the application software 15 and the SaaS execution infrastructure 17 realizes a service corresponding to the request of the SaaS user 10.

### <Example of Application of SaaS Service Infrastructure 16>

Subsequently, application of the SaaS service infrastructure 16 will be explained.

The SaaS service provider 12 specifies the SaaS service infrastructure 17, the business infrastructure 18, and the operation infrastructure 19, which are used in order to realize the SaaS 14, from the operational terminal 13.

The contents thereof are stored from the SaaS service-provider management unit 184 into the service-provider database 204 and from the used-volume management unit 194 into the used-volume-information database 214, and the SaaS execution infrastructure 17 is allocated to the SaaS service provider 12 based on the stored contents. As a result, it is possible to execute the application software 15.

As a result, it is possible to use each of the SO/client management unit 181, the fee management unit 182, and the product management unit 18, thereby making it possible to carry out selling and billing/storage of the SaaS 14. It is possible to use the support-desk unit 191, the configuration management unit 192, the monitoring/operation unit 193, and the used-volume management unit 194, thereby making it possible to carry out supporting and charging of the SaaS 14.

### <Example of Used-Volume Collection of SaaS and SaaS Service Infrastructure>

Collection of the used-volumes of the SaaS 14 and the SaaS service infrastructure 16 will be explained.

When the SaaS user 10 uses the SaaS 14 from the operational terminal 11, the used volume of the application software 15 and the used volume of the SaaS execution infrastructure 17 are measured by the used-volume management unit 194 based on the information of the configuration database 212 and accumulated in the used-volume-information database 214.

### <Example of Usage-Fee Calculation of SaaS 14>

A usage-fee calculation of the SaaS 14 will be explained.

When the usage-fee calculation date comes, the fee management unit 182 acquires the client information of the SaaS user 10 from the SO/fee database 201 and acquires the product information of the SaaS 14 and a fee rule(s) showing a fee system corresponding to each of the product information from the product database 203.

Then, the fee management unit 182 acquires the used volume of the SaaS 14 from the used-volume-information database 214 based on the information of the configuration database 212. The fee management unit 182 calculates the usage fee of the SaaS 14 of the SaaS user 10 from the acquired information.

### <Example of Usage-Cost Calculation of SaaS Service Infrastructure 16>

A usage-cost calculation of the SaaS service infrastructure 16 will be explained.

When a usage-cost calculation date of the SaaS service infrastructure 16 comes, the fee management unit 182 acquires service-provider information of the SaaS service provider 12 from the service-provider database 204 and acquires the product information from the product database 203. Moreover, the fee management unit 182 acquires the used volume of the SaaS service infrastructure 16 from the used-volume-information database 214 based on the information of the configuration database 212 and calculates the usage cost of the SaaS service infrastructure 16 of the SaaS service provider 12 from the acquired information.

### <Example of Billing and Collecting of Usage Fee of SaaS 14>

Billing and collecting of the usage fee of the SaaS 14 will be explained.

When the usage-fee billing date of the SaaS 14 comes, the fee management unit 182 acquires billing information from the fee database 202 and bills the fee to the SaaS user 10, who is registered in the SO/client database 201, via the settlement company 22. Moreover, the fee management unit 182 subjects the fee database 202 to a clearing process by the amount of the money received via the settlement company 22.

### <Example of Offsetting of Usage Fee of SaaS 14 and Usage Cost of SaaS Service Infrastructure 16>

Offsetting of the usage fee of the SaaS 14 and the usage cost of the SaaS service infrastructure 16 will be explained.

When a payment due date for the SaaS service provider 12 comes, the SaaS service-provider management unit 184 acquires the service-provider information from the service-provider database 204. The product management unit 183 acquires the product information from the product database 203 and carries out a process to mutually reconcile and offset the fee invoice of the SaaS 14, which is provided by the service provider from the fee database 202, and the cost invoice of the SaaS service infrastructure 16 based on the service-provider information of a fee calculation target, and stores an invoice of a balance price in the fee database 202.

### <Example of Payment of Balance Price to SaaS Service Provider>

Payment of the balance price will be explained.

When a payment date for the SaaS service provider 12 comes, the SaaS service-provider management unit 184 acquires the service-provider information from the service-provider database 204 and passes the information to the fee management unit 182. The fee management unit 182 acquires the invoice of the balance price from the fee database 202 and carries out a payment process for the SaaS service provider 12.

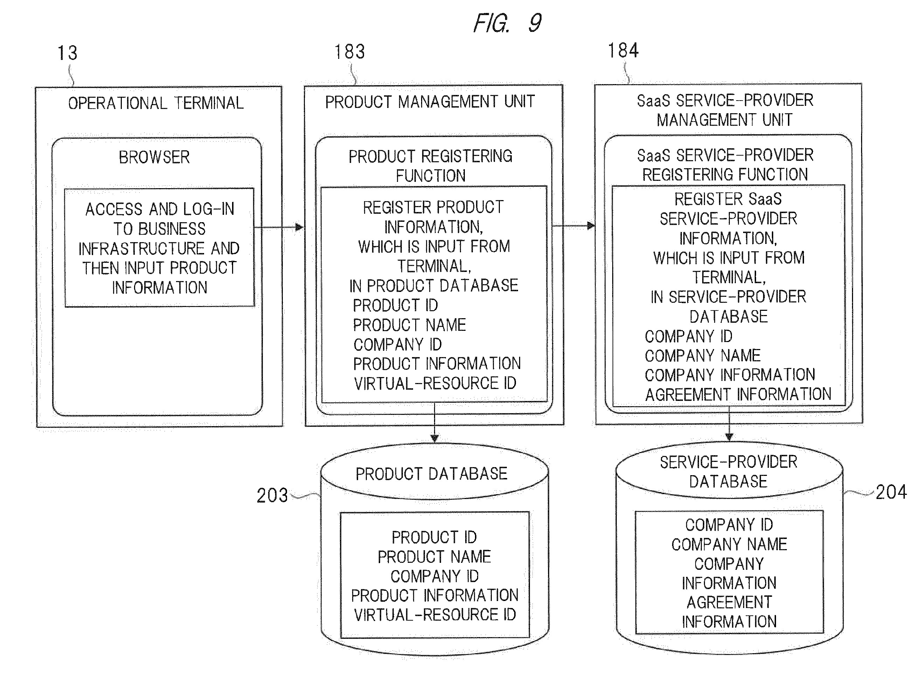

Subsequently, the processes from the SaaS product registration to the payment of the balance price of the SaaS usage fee by the SaaS settlement system 1 will be explained by using FIG. 9 to FIG. 17.

Hereinafter, various functions of carrying out the processes shown in FIG. 9 to FIG. 17 are realized, for example, by executing the software in the form of a program stored in, for example, a program storage memory (not shown) provided in, for example, the SaaS service infrastructure 16 by, for example, a CPU (Central Processing Unit: not shown) of the SaaS service infrastructure 16.

### <Example of Process of SaaS Product Registration>

FIG. 9 is an explanatory drawing showing an example of SaaS product registration.

The SaaS service provider 12 invokes a product registering function of the product management unit 183 by utilizing, for example, a browser of the operational terminal 13 and inputs information about a product from the operational terminal 13 in accordance with instructions of the product registering function.

The input information about the product is stored in the product database 203 by the product registering function of the product management unit 183. The product management unit 183 invokes a SaaS service-provider registering function of the SaaS service-provider management unit 184 and inputs information about the SaaS service provider 12 from the operational terminal 13 in accordance with instructions of the SaaS service-provider registering function. The input information about the SaaS service provider 12 is stored in the service-provider database 204 by the SaaS service-provider registering function of the SaaS service-provider management unit 184.

### <Example of Process of SaaS Application and Provisioning>

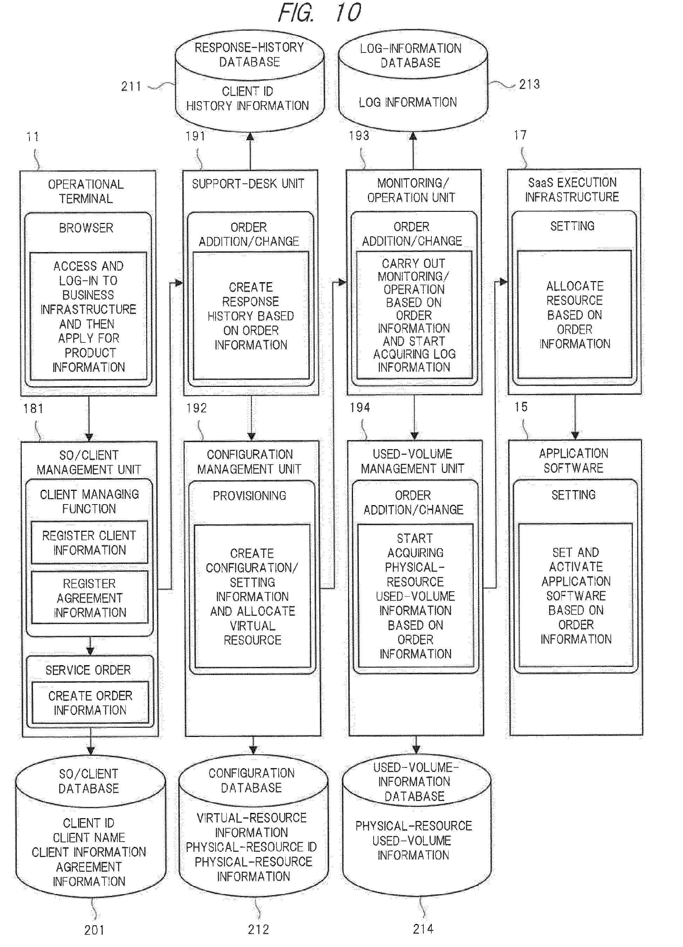

FIG. 10 is an explanatory drawing showing an example of SaaS application and provisioning.

The SaaS user 10 invokes a client managing function of the SO/client management unit 181 by using a browser of the operational terminal 11 and inputs client information, agreement information, and order information of the product in accordance with instructions of the client managing function. The input client, agreement, and order information is stored in the SO/client database 201 by a client-information managing function of the SO/client management unit 181 and a service order.

The SO/client management unit 181 invokes the support-desk unit 191. The invoked support-desk unit 191 stores the client and order information in the response-history database 211. Subsequently, the SO/client management unit 181 invokes the configuration management unit 192.

The invoked configuration management unit 192 stores agreement and order information in the configuration database 212. Then, the SO/client management unit 181 invokes the monitoring/operation unit 193. The monitoring/operation unit 193 stores the agreement and order information in the log-information database 213.

Moreover, the SO/client management unit 181 invokes the used-volume management unit 194. The used-volume management unit 194 stores the agreement and order information in the used-volume-information database 214. The SO/client management unit 181 allocates a resource (s) of the SaaS execution infrastructure 17 to the application software 15 in accordance with the order information created by the service order. The SaaS execution infrastructure 17 invokes the application software 15 and sets and activates the application software 15 in accordance with the order information created by the service order.

### <Example of Application Process of SaaS Service Infrastructure>

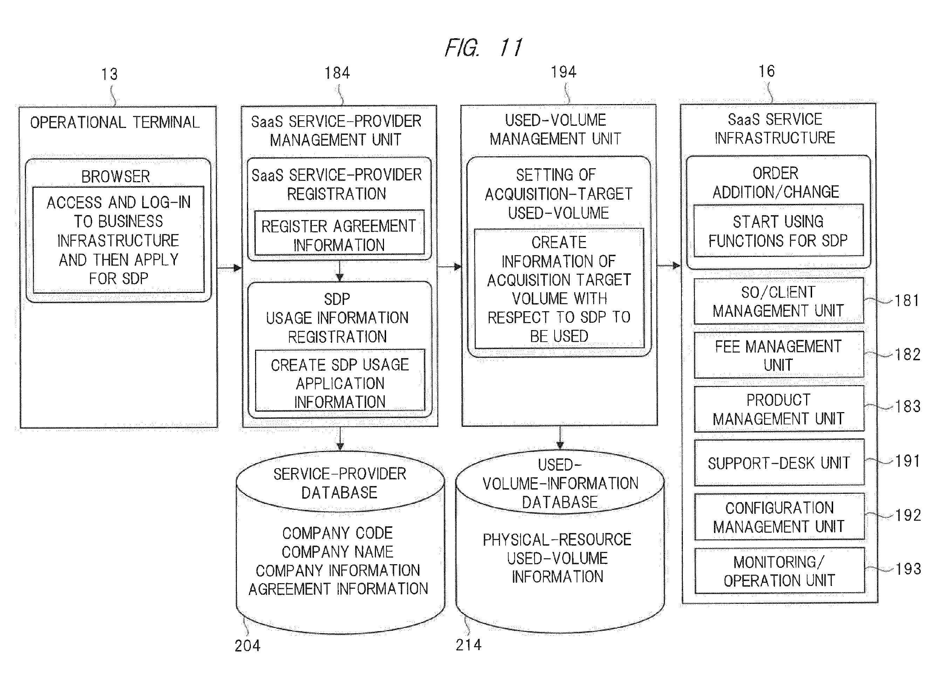

FIG. 11 is an explanatory drawing showing an example of an application process of the SaaS service infrastructure 16.

The SaaS service provider 12 invokes the SaaS service-provider registering function of the SaaS service-provider management unit 184 by using, for example, a browser of the operational terminal 13 and inputs agreement information in accordance with instructions of the SaaS service-provider registering function to apply for SDP (SaaS Delivery Platform).

The input agreement information is stored in the service-provider database 204 by the SaaS service-provider registering function of the SaaS service-provider management unit 184. A SaaS service-infrastructure usage-information registering function is invoked by the SaaS service-provider registering function. The SaaS service provider 12 applies for usage of the SaaS service infrastructure in accordance with instructions of the SaaS service-infrastructure usage-information registering function.

The input application is stored in the service-provider database 204 as agreement information by the SaaS service-infrastructure usage-information registering function of the SaaS service-provider management unit 184. The SaaS service-provider management unit 184 invokes the used-volume-information database 214 and stores physical-resource used-volume information in the used-volume-information database 214 so that the used volume of the SaaS service infrastructure, which is a usage target, can be measured in accordance with the agreement information.

The SaaS service-provider management unit 184 enables usage of the SO/client management unit 181, the fee management unit 182, the product management unit 183, the support-desk unit 191, the configuration management unit 192, and the monitoring/operation unit 193, for which the application is made by the SaaS service provider in the SaaS service infrastructure 16.

### <Example of Process of Measuring Used Volumes of SaaS and SaaS Service Infrastructure>

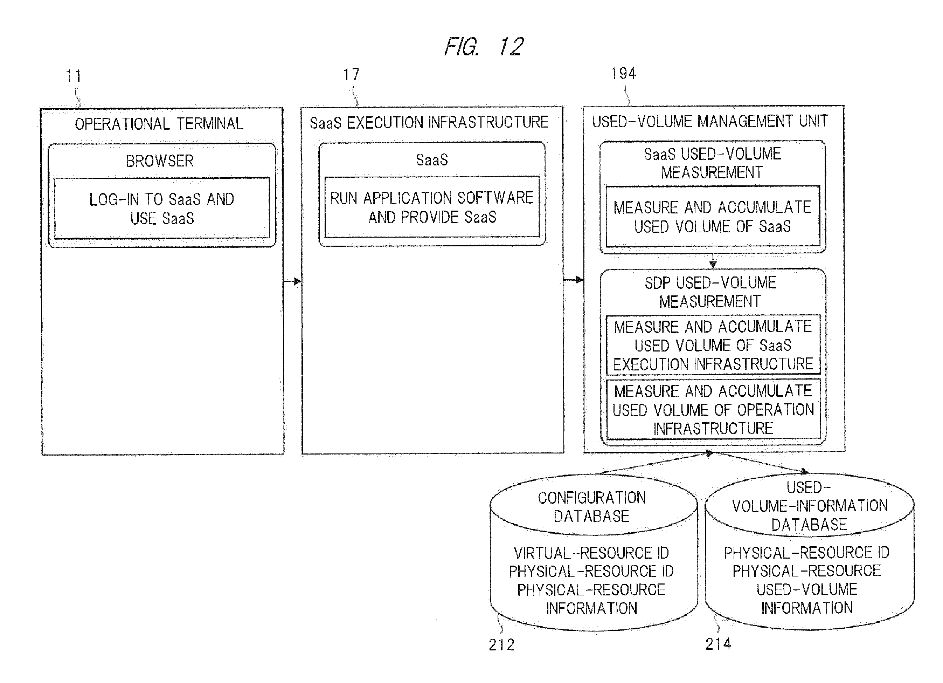

FIG. 12 is an explanatory drawing showing an example of a used-volume measuring process of the SaaS 14 and the SaaS service infrastructure 16.

The SaaS user 10 logs in to the SaaS 14 by using, for example, a browser of the operational terminal 11 and starts using the SaaS 14. When start of usage is ordered, the SaaS execution infrastructure 17 causes the application software 15 to operate and provides a service(s) to the SaaS user.

The SaaS execution infrastructure 17 invokes the used-volume management unit 194 along with start of the service. The used-volume management unit 194 measures the used volume of the SaaS 14 itself by a SaaS used-volume measuring function and stores the measurement result thereof in the used-volume-information database 214.

Using a SaaS service-infrastructure used-volume measuring function of the used-volume management unit 194, the used volume of a physical resource(s) used by the SaaS 14 is measured based on correspondence information of a virtual resource(s) and the physical resource(s) of the configuration database 212 and the measurement result thereof is stored in the used-volume information 214.

Using the SaaS service-infrastructure used-volume measuring function of the used-volume management unit 194, the used volume of the operation infrastructure 19 used by the SaaS 14 is measured and the measurement result thereof is stored in the used-volume-information database 214.

### <Example of Calculation Process of Usage Fee of SaaS>

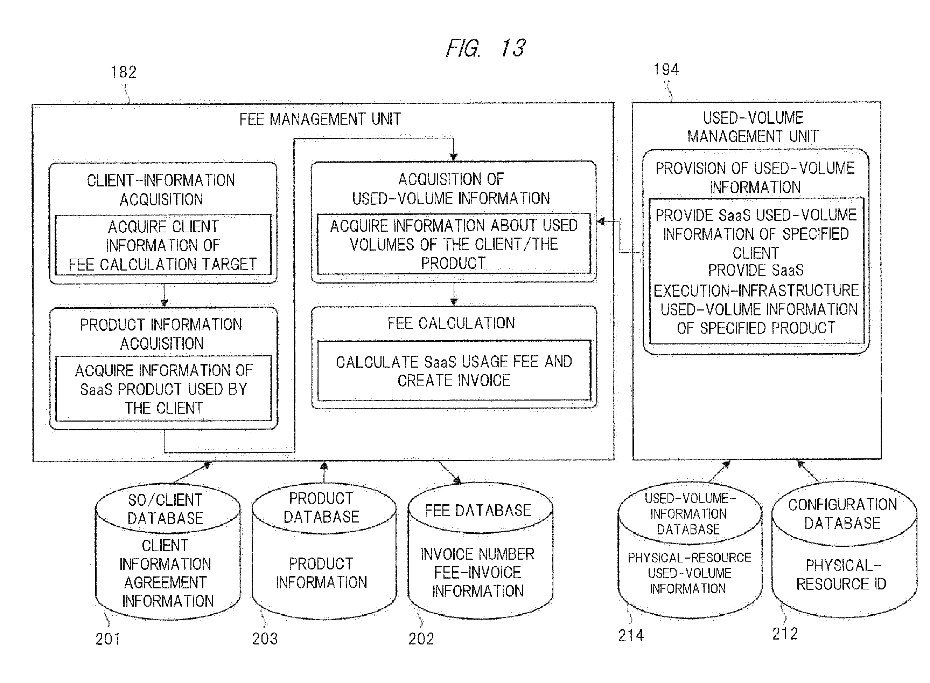

FIG. 13 is an explanatory drawing showing an example of a calculation process of the usage fee of the SaaS 14.

When the usage-fee calculation date of the SaaS 14 comes, the fee management unit 182 acquires the client information and the agreement information of the SO/client database 201 by a client-information acquiring function and acquires the information of the product, which is used by the client, from the product database 203 by a product-information acquiring function based on the acquired agreement information.

The fee management unit 182 requests the used-volume management unit 194 to acquire used-volume information in order to acquire the used volume of the resource (s) used by the product based on the acquired product information. The used-volume management unit 194, which has been requested to acquire the used-volume information, acquires a physical-resource ID (s) , which is used by the product, from the configuration database 212 based on the given product information and acquires used-volume information of the physical resource from the used-volume management unit 194 based on the acquired physical resource ID.

Then, the acquired physical-resource used-volume information about the product is returned to the fee management unit 182, the usage fee of the product is calculated in accordance with the physical-resource used-volume information, which has been acquired by the used-volume management unit 194, based on a previously-acquired fee calculation rule (s) of the product, and invoice information is created. The fee management unit 182 numbers the invoice information with an invoice number to store the numbered invoice information in the fee database 202.

### <Example of Calculation Process of Usage Cost of SaaS Service Infrastructure>

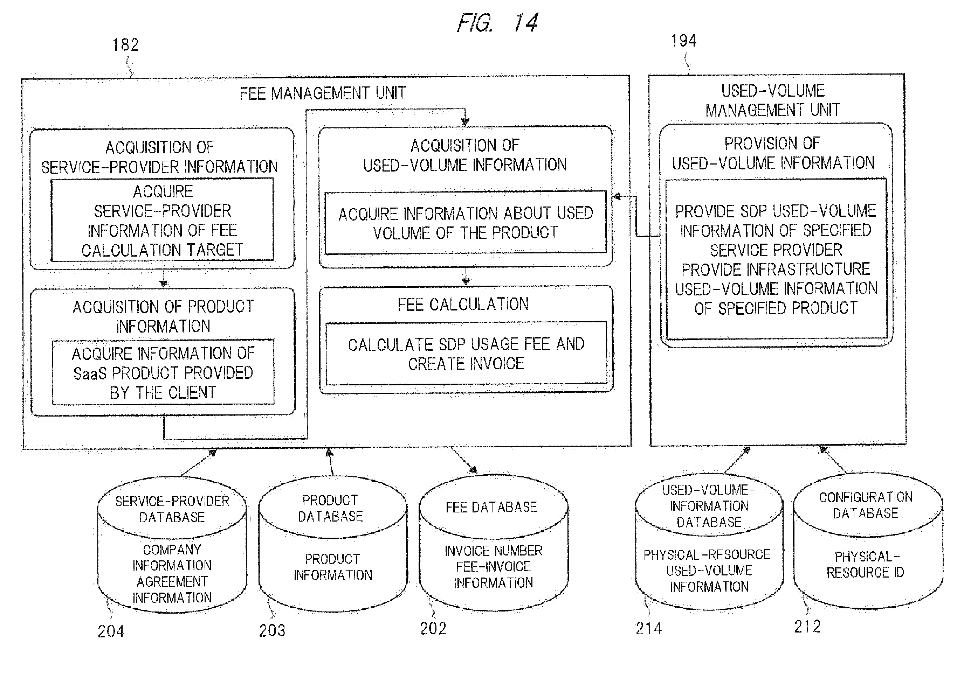

FIG. 14 is an explanatory drawing showing an example of a calculation process of usage cost of the SaaS service infrastructure 16.

When a usage-cost calculation date of the SaaS service infrastructure 16 comes, the fee management unit 182 acquires the company information and the agreement information of the service-provider database 204 by a service-provider-information acquiring function and acquires the product information, which is provided by the service provider, from the product database 203 by the product-information acquiring function based on the acquired agreement information.

Then, the fee management unit 182 requests the used-volume management unit 194 to acquire the used-volume information in order to acquire the used volume of the SaaS service infrastructure 16, which is used by the product, based on the acquired product information.

The used-volume management unit 194, which has been requested to acquire the used volume, acquires the physical-resource ID of the SaaS service infrastructure 16, which is used by the product, from the configuration database 212 based on the given product information.

Subsequently, the used-volume management unit 194 returns the physical-resource used-volume information from the used-volume-information database 214 to the fee management unit 182 based on the acquired physical-resource ID, the usage cost (SDP (SaaS Delivery Platform) usage fee) of the SaaS service infrastructure 16 is calculated in accordance with the physical used-volume information, which has been returned from the used-volume management unit 194, based on a cost calculation rule(s) of the acquired product information, and invoice information is created. Then, the fee management unit 182 numbers the invoice information with an invoice number to store the numbered invoice information in the fee database 202.

### <Example of Billing/Collecting Process of Usage Fee of SaaS>

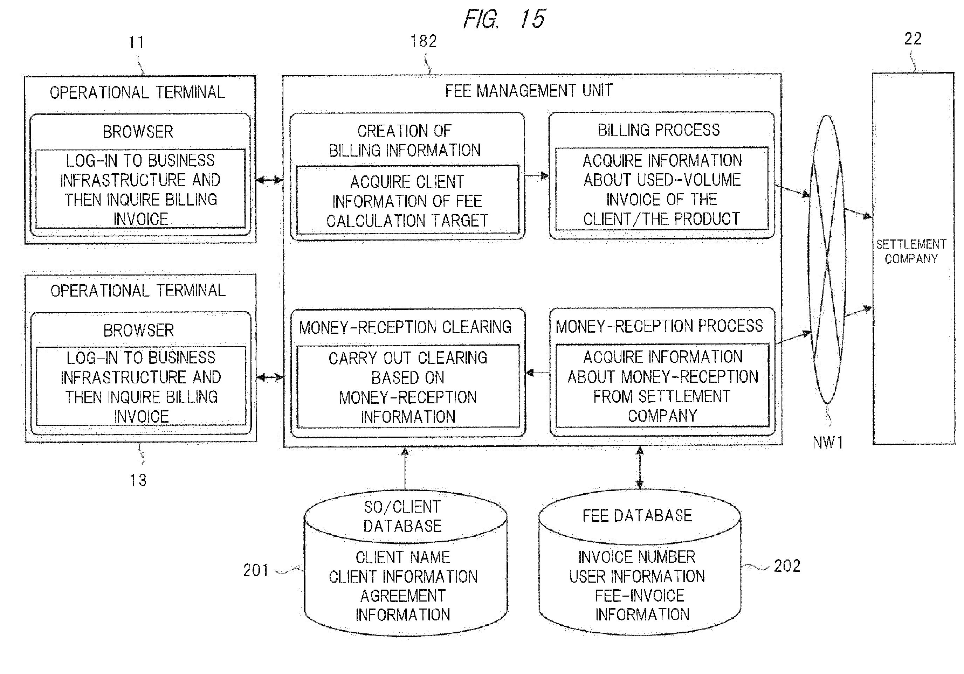

FIG. 15 is an explanatory drawing showing an example of a billing/collecting process of the usage fee of the SaaS 14.

When a usage-fee billing date of the product comes, using a billing-information creating function of the fee management unit 182, the information of the target client is acquired from the SO/client database 201, the fee invoice information is acquired from the fee database 202 based on the acquired information of the target client, name merging is carried out for each client, bill information is created and such information is passed to the settlement company 22 to carry out a billing process.

When a money-reception deadline comes, the fee management unit 182 acquires money-reception information from the settlement company 22. Using a money-reception clearing function of the fee management unit 182, a money-reception clearing process is carried out based on the money-reception information, and the result thereof is stored in the fee database 202.

The billing information and the money-reception information of each client and each product can be checked when the SaaS user 10 uses the operational terminal 11 and when the SaaS service provider 12 uses the operational terminal 13.

### <Example of Offset Process of Usage Cost>

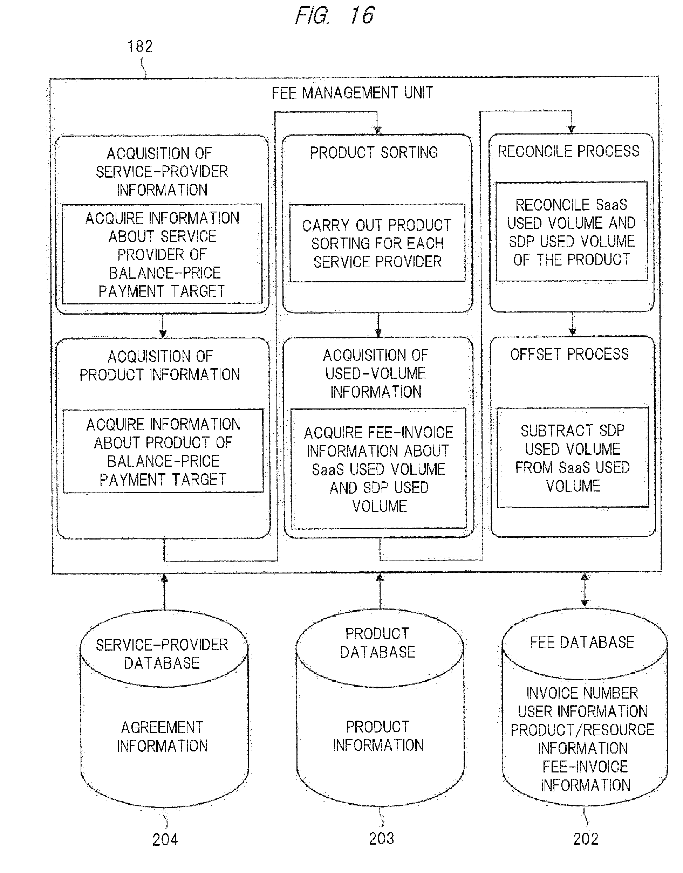

FIG. 16 is an explanatory drawing showing an example of an offset process of the usage fee of the SaaS 14 and the usage cost of the SaaS service infrastructure 16.

When a balance price calculation date comes, the fee management unit 182 acquires the agreement information about the service provider of a balance-price payment target from the service-provider database 204 by the service-provider-information acquiring function, and acquires the product information of the balance-price payment target from the product database 203 by the product-information acquiring function.

Moreover, the fee management unit 182 sorts, for each service provider, the agreement information of the service provider and the product information of the product by a product sorting function, and acquires the SaaS usage fee of the product and the SaaS service-infrastructure usage cost of the service provider by a usage-fee-information acquiring function.

Then, the fee management unit 182 carries out a process of subtracting the cost of the SaaS service infrastructure 16 of the service provider from the usage fee of the SaaS 14 of the product and offsetting such cost and usage fee by a reconcile process, and the fee management unit 182 stores fee invoice information of the balance price, which has undergone offsetting, in the fee database 202.

### <Example of Payment Process of Balance Price>

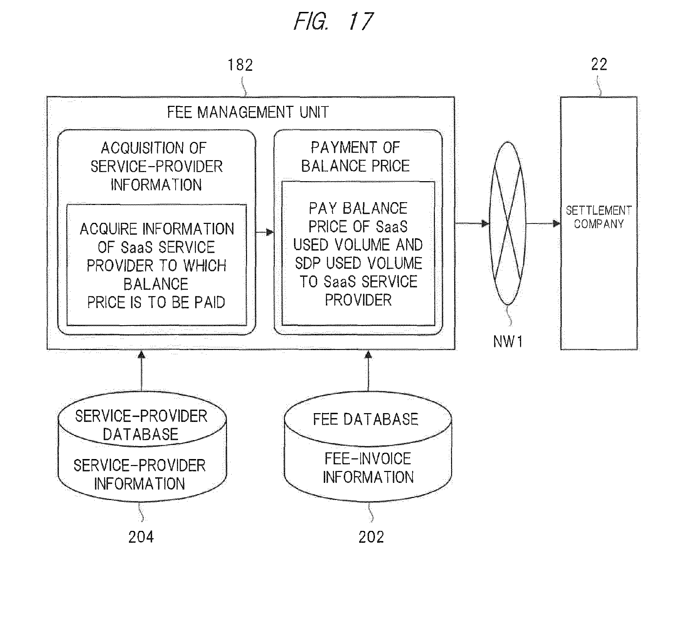

FIG. 17 is an explanatory drawing showing an example of a payment process of the balance price.

When a balance-price payment date comes, the fee management unit 182 acquires the service-provider information about the service provider of the balance-price payment target from the service-provider database 204 by the service-provider-information acquiring function, acquires the fee-invoice information of the balance price from the fee database 202 by a balance-price paying function, and requests payment to the settlement company 22.

### <Explanation about Relations of Business-System Database and Operation-System Database>

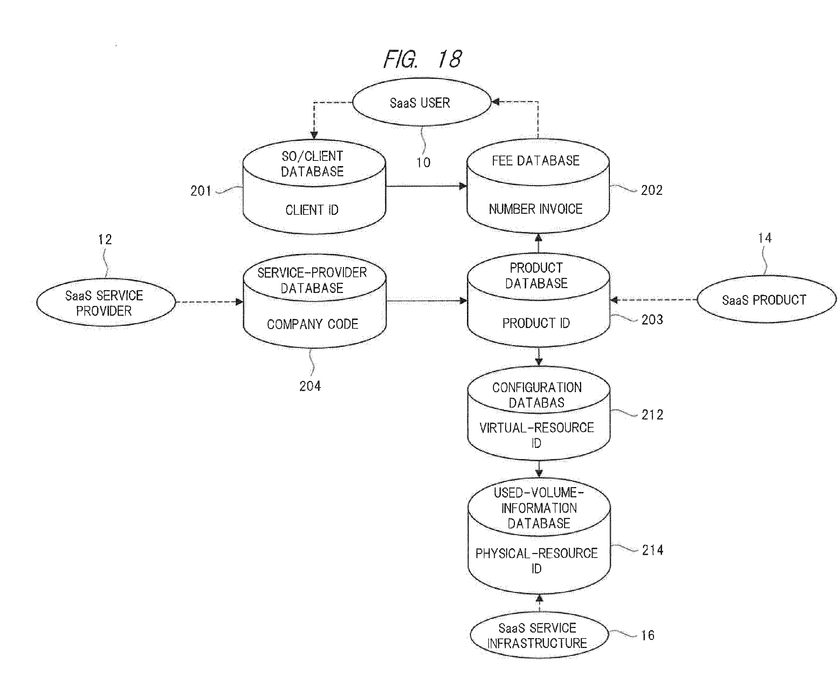

FIG. 18 is an explanatory drawing showing relations of the business-system database 20 and the operation-system database 21.

A client ID is given to the SaaS user 10, and this client ID serves as a key of the SO/client database 201. Moreover, a company code is given to the SaaS service provider 12, and this company code serves as a key of the service-provider database 204.

A product code is given to the product of the SaaS 14, and this product code serves as a key of the product database 203. The used volume of the physical resource used in the SaaS service infrastructure 16 is summed and accumulated for each physical-resource ID.

In this manner, in the SaaS settlement system 1, respective fees can be automatically calculated from the usage type and the volume of the SaaS 14 and the usage type and the volume of the SaaS service infrastructure 16, the fees can be offset by the money received from the SaaS user, and the balance price can be paid to the SaaS service provider.

By virtue of this, according to the present embodiment, the load of the settlement process of the SaaS service provider that settles low-price usage fees every month can be reduced.

Moreover, SaaS service efficiency can be improved, and profits of both of the SaaS service provider and the SaaS infrastructure service provider can be increased by expanding SaaS sales.

In the foregoing, the invention made by the inventors of the present invention has been concretely described based on the embodiments. However, it is needless to say that the present invention is not limited to the foregoing embodiments and various modifications and alterations can be made within the scope of the present invention.

### INDUSTRIAL APPLICABILITY

The present invention is suitable for collection/settlement processing techniques of usage fees of SaaS.

### Description of Reference Signs

- 1: SaaS SETTLEMENT SYSTEM
- 10: SaaS USER
- 11: OPERATIONAL TERMINAL
- 12: SaaS SERVICE PROVIDER
- 13: OPERATIONAL TERMINAL
- 14: SaaS
- 15: APPLICATION SOFTWARE
- 16: SaaS SERVICE INFRASTRUCTURE
- 17: SaaS EXECUTION INFRASTRUCTURE
- 18: BUSINESS INFRASTRUCTURE
- 19: OPERATION INFRASTRUCTURE
- 20: BUSINESS-SYSTEM DATABASE
- 21: OPERATION-SYSTEM DATABASE
- 22: SETTLEMENT COMPANY
- 181: SO/CLIENT MANAGEMENT UNIT
- 182: FEE MANAGEMENT UNIT
- 183: PRODUCT MANAGEMENT UNIT
- 184: SaaS SERVICE-PROVIDER MANAGEMENT UNIT
- 191: SUPPORT-DESK UNIT
- 192: CONFIGURATION MANAGEMENT UNIT
- 193: MONITORING/OPERATION UNIT
- 194: USED-VOLUME MANAGEMENT UNIT
- 201: SO/CLIENT DATABASE
- 202: FEE DATABASE
- 203: PRODUCT DATABASE
- 204: SERVICE-PROVIDER DATABASE
- 211: RESPONSE-HISTORY DATABASE
- 212: CONFIGURATION DATABASE
- 213: LOG-INFORMATION DATABASE
- 214: USED-VOLUME-INFORMATION DATABASE
- NW1: COMMUNICATION LINES
- NW2: COMMUNICATION LINES

## Claims

1. A SaaS settlement system having a SaaS service infrastructure that realizes a SaaS service,
wherein the SaaS service infrastructure includes:
a SaaS execution infrastructure that operates application software of a SaaS service provider and realizes a SaaS;
a business infrastructure that calculates a usage fee of the SaaS to be billed to a SaaS user and carries out fee billing/collecting with respect to the SaaS user; and
an operation infrastructure that determines operation of the SaaS in accordance with an application content of the SaaS user and monitors and operates a providing state of the SaaS,
the operation infrastructure measures a used volume of the SaaS used by the SaaS user and a used volume of the SaaS service infrastructure used by the SaaS, and
the business infrastructure calculates, as a price to be paid to the SaaS service provider, a difference obtained by subtracting a usage fee of the SaaS service infrastructure calculated from the used volume of the SaaS service infrastructure from a usage fee of the SaaS calculated from the used volume of the SaaS measured by the operation infrastructure.

2. The SaaS settlement system according to claim 1,
wherein the used volume of the SaaS service infrastructure measured by the operation infrastructure is a used volume of the SaaS execution infrastructure, the business infrastructure, and the operation infrastructure used by the SaaS service provider in order to realize the SaaS.

3. The SaaS settlement system according to claim 1, comprising:
a first database that stores SaaS product information of each SaaS user and a fee calculation rule showing a rule of a fee calculation corresponding to each product information of the SaaS; and
a second database that stores the used volume of the SaaS measured by the operation infrastructure,
wherein the business infrastructure acquires the fee calculation rule corresponding to the SaaS for which the usage fee is to be calculated, from the first database, acquires the used volume of the SaaS from the second database, and calculates the usage fee of the SaaS from the used volume of the SaaS based on the fee calculation rule.

4. The SaaS settlement system according to claim 1, comprising:
a third database that stores a cost calculation rule for calculating the usage fee of the SaaS service infrastructure corresponding to each of the SaaS service provider; and
a fourth database that stores the used volume of the SaaS service infrastructure measured by the operation infrastructure,
wherein the business infrastructure retrieves the cost calculation rule corresponding to the SaaS service provider, which has registered the SaaS for which the usage fee is to be calculated, from the third database, retrieves the used volume of the SaaS service infrastructure from the fourth database, and calculates the usage fee of the SaaS service infrastructure based on the cost calculation rule.

5. A SaaS usage-fee settlement method of settling a usage fee of a SaaS by a computer system provided with a SaaS service infrastructure that includes a SaaS execution infrastructure that operates application software of a SaaS service provider and realizes the SaaS, a business infrastructure that calculates a usage fee of the SaaS to be billed to a SaaS user and carries out fee billing/collecting with respect to the SaaS user, and an operation infrastructure that determines operation of the SaaS in accordance with an application content of the SaaS user and monitors and operates a providing state of the SaaS, the SaaS usage-fee settlement method comprising:
a step of measuring a used volume of the SaaS, which is used by the SaaS user, by the operation infrastructure;
a step of measuring a used volume of the SaaS service infrastructure, which is used by the SaaS, by the operation infrastructure;
a step of calculating a usage fee of the SaaS from the used volume of the SaaS, which is measured by the operation infrastructure, by the business infrastructure;
a step of calculating a usage fee of the SaaS service infrastructure from the used volume of the SaaS service infrastructure, by the business infrastructure; and
a step of calculating, as a price to be paid to the SaaS service provider, a difference obtained by subtracting the calculated usage fee of the SaaS service infrastructure from the calculated usage fee of the SaaS, by the business infrastructure.

6. The SaaS usage-fee settlement method according to claim 5,
wherein, in the step of measuring the used volume of the SaaS service infrastructure by the operation infrastructure, a used volume of the SaaS execution infrastructure, the business infrastructure, and the operation infrastructure used by the SaaS service provider in order to realize the SaaS is measured.

7. The SaaS usage-fee settlement method according to claim 5, wherein the step of calculating the usage fee of the SaaS includes:
a step of acquiring a fee calculation rule corresponding to the SaaS for which the usage fee is to be calculated;
a step of acquiring the used volume of the SaaS measured by the operation infrastructure; and
a step of calculating the usage fee of the SaaS from the used volume of the SaaS based on the acquired fee calculation rule.

8. The SaaS usage-fee settlement method according to claim 5,
wherein the step of calculating the usage fee of the SaaS service infrastructure includes:
a step of acquiring a cost calculation rule corresponding to the SaaS service provider, which has registered the SaaS for which the usage fee is to be calculated;
a step of acquiring the used volume of the SaaS service infrastructure measured by the operation infrastructure; and
a step of calculating the usage fee of the SaaS service infrastructure from the used volume of the SaaS service infrastructure based on the acquired cost calculation rule.

9. A program executed by a computer system provided with a SaaS service infrastructure that includes a SaaS execution infrastructure that operates application software of a SaaS service provider and realizes the SaaS, a business infrastructure that calculates a usage fee of the SaaS to be billed to a SaaS user and carries out fee billing/collecting with respect to the SaaS user, and an operation infrastructure that determines operation of the SaaS in accordance with an application content of the SaaS user and monitors and operates a providing state of the SaaS, the program comprising:
a step of measuring a used volume of the SaaS, which is used by the SaaS user, by the operation infrastructure;
a step of measuring a used volume of the SaaS service infrastructure, which is used by the SaaS, by the operation infrastructure;
a step of calculating a usage fee of the SaaS from the used volume of the SaaS, which is measured by the operation infrastructure, by the business infrastructure;
a step of calculating a usage fee of the SaaS service infrastructure from the used volume of the SaaS service infrastructure, by the business infrastructure; and
a step of calculating, as a price to be paid to the SaaS service provider, a difference obtained by subtracting the calculated usage fee of the SaaS service infrastructure from the calculated usage fee of the SaaS, by the business infrastructure.

10. The program according to claim 9,
wherein, in the step of measuring the used volume of the SaaS service infrastructure by the operation infrastructure, a used volume of the SaaS execution infrastructure, the business infrastructure, and the operation infrastructure used by the SaaS service provider in order to realize the SaaS is measured.

11. The program according to claim 9,
wherein the step of calculating the usage fee of the SaaS causes the computer system to execute:
a step of acquiring a fee calculation rule corresponding to the SaaS for which the usage fee is to be calculated;
a step of acquiring the used volume of the SaaS measured by the operation infrastructure; and
a step of calculating the usage fee of the SaaS from the used volume of the SaaS based on the acquired fee calculation rule.

12. The program according to claim 9,
wherein the step of calculating the usage fee of the SaaS service infrastructure causes the computer system to execute:
a step of acquiring a cost calculation rule corresponding to the SaaS service provider, which has registered the SaaS for which the usage fee is to be calculated;
a step of acquiring the used volume of the SaaS service infrastructure measured by the operation infrastructure; and
a step of calculating the usage fee of the SaaS service infrastructure from the used volume of the SaaS service infrastructure based on the acquired cost calculation rule.
